(19) Europäisches Patentamt
European Patent Office
Office européen des brevets

(11) Veröffentlichungsnummer: **0 522 397 A1**

# (12) EUROPÄISCHE PATENTANMELDUNG

(21) Anmeldenummer: **92110959.1**

(22) Anmeldetag: **29.06.92**

(51) Int. Cl.$^5$: **C08L 69/00**, C08K 5/523, //(C08L69/00,55:04,77:00)

(30) Priorität: **12.07.91 DE 4123041**

(43) Veröffentlichungstag der Anmeldung: **13.01.93 Patentblatt 93/02**

(84) Benannte Vertragsstaaten: **DE FR GB IT**

(71) Anmelder: **BAYER AG**
**W-5090 Leverkusen 1 Bayerwerk(DE)**

(72) Erfinder: **Fuhr, Karl, Dr.**
**Krüllsdyk 55**
**W-4150 Krefeld(DE)**
Erfinder: **Müller, Friedemann, Dr.**
**Am Steinacker 5**
**W-4040 Neuss(DE)**
Erfinder: **Ott, Karl-Heinz, Dr.**
**Paul-Klee-Strasse 54**
**W-5090 Leverkusen 1(DE)**

(54) **Thermoplastische Polycarbonatformmassen mit flammwidrigen Eigenschaften.**

(57) Thermoplastische Polycarbonatformmassen enthaltend
A) 40 bis 90 Gew.-Teile eines thermoplastischen aromatischen Polycarbonats,
B) 0 bis 80 Gew.-Teile eines Copolymerisats bzw. Polykondensats bestehend aus
B.1) 0 bis 50 Gew.-Teilen eines thermoplastischen Copolymerisats aus 50 bis 95 Gew.-% Styrol, α-Methylstyrol, kernalkyliertem Styrol, Halogenstyrol oder Mischungen daraus und 5 bis 50 Gew.-% Acrylnitril, Methacrylnitril, Alkylacrylat, Alkylmethacrylat, Maleinsäureanhydrid, N-substituiertem Maleinimid, Vinylacetat oder Mischungen daraus und/oder
B.2) 0 bis 80 Gew.-Teilen eines thermoplastischen Polyalkylenterephthalats,
C) 1 bis 25 Gew.-Teile Pfropfpolymerisat hergestellt aus
C.1) 5 bis 90 Gew.-Teilen einer Mischung aus:
C.1.1) 50 bis 95 Gew.-% Styrol, α-Methylstyrol, Halogenstyrol, kernalkyliertem Styrol, Methylmethacrylat oder Mischungen daraus, und
C.1.2) 5 bis 50 Gew.-% (Meth)Acrylnitril, Methylmethacrylat, Maleinsäureanhydrid, N-substituiertem Maleinimid oder Mischungen daraus, auf
C.2) 10 bis 95 Gew.-Teilen eines Kautschuks mit einer Glastemperatur $T_G \leqq 10\,°C$,
D) 1 bis 30 Gew.-Teile Phosphorsäureester von Phenolen, Bisphenolen und/oder Polyphenolen,
E) 0,05 bis 5 Gew.-Teile Antidrippingsmittel,
wobei das Gesamtgewicht 100 Gew.-Teile A+B+C+D+E ergeben soll, dadurch gekennzeichnet, daß sie als Antidrippingmittel E) aromatische Polyamide bzw. Polyimidamide (Aramide) in Form von Fasern, Pulver oder auf Trägern niedergeschlagen enthalten.

EP 0 522 397 A1

Gegenstand der vorliegenden Erfindung sind thermoplastische Formmassen enthaltend

A) 40 bis 90 Gew.-Teile, vorzugsweise 50 bis 70 Gew.-Teile, eines thermoplastischen aromatischen Polycarbonats,

B) 0 bis 80 Gew.-Teile eines Copolymerisats bzw. Polykondensats bestehend aus

B.1) 0 bis 50 Gew.-Teilen, vorzugsweise 0 bis 35 Gew.-Teilen, insbesondere 1 bis 10 Gew.-Teilen, eines thermoplastischen Copolymerisats aus 50 bis 95 Gew.-% Styrol, $\alpha$-Methylstyrol, kernalkyliertem Styrol, Halogenstyrol oder Mischungen daraus und 5 bis 50 Gew.-% Acrylnitril, Methacrylnitril, Alkylacrylat, Alkylmethacrylat, Maleinsäureanhydrid, N-substituiertem Maleinimid, Vinylacetat oder Mischungen daraus und/oder

B.2) 0 bis 80 Gew.-Teilen, vorzugsweise 0 bis 60 Gew.-Teilen, insbesondere 0 bis 10 Gew.-Teilen, eines thermoplastischen Polyalkylenterephthalats,

C) 1 bis 25 Gew.-Teile, vorzugsweise 5 bis 20 Gew.-Teile, Pfropfpolymerisat hergestellt aus

C.1) 5 bis 90 Gew.-Teilen, vorzugsweise 30 bis 80 Gew.-Teilen, einer Mischung aus:

C.1.1) 50 bis 95 Gew.-% Styrol, $\alpha$-Methylstyrol, Halogenstyrol, kernalkyliertem Styrol, Methylmethacrylat oder Mischungen daraus, und

C.1.2) 5 bis 50 Gew.-% (Meth)Acrylnitril, Methylmethacrylat, Maleinsäureanhydrid, N-substituiertem Maleinimid oder Mischungen daraus, auf

C.2) 10 bis 95 Gew.-Teilen, vorzugsweise 20 bis 70 Gew.-Teilen, eines Kautschuks mit einer Glastemperatur TG $\leqq 10°$ C,

D) 1 bis 30 Gew.-Teile, vorzugsweise 2 bis 20 Gew.-Teile, insbesondere 5 bis 18 Gew.-Teile, Phosphorsäureester von Phenolen, Bisphenolen und/oder Polyphenolen,

E) 0,05 bis 5 Gew.-Teile Antidrippingsmittel, wobei das Gesamtgewicht 100 Gew. Teile A + B + C + D + E ergeben soll,

die dadurch gekennzeichnet sind, daß sie als Antidrippingmittel 0,05 bis 5 Gew.-Teile, bevorzugt 0,5 bis 3 Gew.-Teile, aromatische Polyamide und/oder Polyimidamide in Form von (gemahlenen) Fasern, (feinteiligen) Pulvern oder auf Trägern niedergeschlagen enthalten.

Die aromatischen Polyamide/Polyimidamide bestehen überwiegend, d.h. zu mehr als 50 Gew.-%, vorzugsweise 85 Gew.-% aus aromatischen Dicarbonsäuren und aromatischen Diaminen. Sie können in feinteiliger Form als Fasern und/oder Pulver verwendet werden oder auf Trägern niedergeschlagen sein. Aromatische Polyamide/Polyimidamide sind solche, die unter dem Begriff Aramide bekannt sind. Die aromatischen Polyamide/Polyimidamide können nach bekannten Verfahren hergestellt werden, z.B. durch Kondensation aus (aktivierten) Säurederivaten mit Diaminen auch nach den Methoden der Grenzflächenkondensation.

Der Zusatz von aromatischen Amiden/Polyimidamiden zu den erfindungsgemäßen Formmassen verhindert deren brennendes Abtropfen im Brandfall. So wird beim Einsatz von aromatischen Polyamiden/Polyimidamiden in Kombination mit den Phosphorverbindungen D) ein Selbstverlöschen ohne Abtropfen gemäß dem Test nach UL-94 mit der Bewertung V-O bei 1,6 mm dicken Prüfkörpern erzielt.

Es ist bekannt, Formmassen aus thermoplastischen, aromatischen Polycarbonaten, thermoplastischen Copolymerisaten und Pfropfpolymerisaten sowie aromatischen Estern von Phosphorsäure und Phosphonsäuren mit Tetrafluorethylenpolymerisaten Antidripping-Eigenschaften zu geben (siehe DE-OS 3 429 481, DE-OS 3 430 234, EP-A 0 174 493, DE-OS 3 444 868, DE-OS 3 444 869, DE-OS 3 516 807, DE-OS 3 521 888, DE-OS 3 523 316, DE-OS 3 523 314, DE-OS 3 545 609, DE-OS 3 615 768, DE-OS 3 617 511, DE-OS 3 628 904, DE-OS 3 629 546, DE-OS 3 824 356, DE-OS 39 40 927, Aromatische Polyamide/Polyimidamide werden als Antidrippingmittel jedoch nicht genannt. Als Nachteil der Tetrafluorethylenpolymerisate ist ihr Halogengehalt und die durch sie im Brandfall verursachte starke Verformung der Prüfkörper (z.B. UL94-Test bei der Beflammung) anzusehen.

Ferner werden in EP-A 272 441 und EP-A 340 580 teilchenförmige Siliconkautschuke als Antidrippingmittel u.a. für Formmassen aus thermoplastischen aromatischen Polycarbonaten, Pfropfpolymerisaten und gegebenenfalls thermoplastischen Copolymerisaten und thermoplatischen Polyalkylenterephthalaten beschrieben. Aromatische Polyamide/Polyimidamide werden als Antidrippingmittel nicht genannt. Siliconkautschuke besitzen als Antidrippingmittel geringere Wirkung als Polytetrafluorethylenpolymerisate.

In EP-A 332 965, EP-A 413 167 sowie in DE-OS 3 925 792 werden aromatische Polyamide/Polyimidamide als Antidrippingmittel für aliphatische Polyamidformmassen beschrieben. Auf Grund ihrer chemischen Struktur wurde ihre Eigenschaft als Antidrippingsmittel als substratspezifisch angesehen. Es konnte nicht erwartet werden, daß diese auch in anderen Formmassen zur Wirkung kommen könne.

Überraschend wurde gefunden, das durch den Zusatz von 0,05 bis 5 Gew.-%, vorzugsweise 0,5 bis 3 Gew.-%, aromatischer Polyamide/Polyimidamide (Aramide) in Faser- oder Pulverform oder niedergeschlagen auf organischen oder anorganischen Trägern in Verbindung mit dem Zusatz von aromatischen Estern der Phosphorsäure zu Formmassen aus aromatischen thermoplastischen Polycarbonaten, Pfropfpolymerisaten und gegebenenfalls thermoplastischen Copolymerisaten und thermoplastischen Polyalkylenterephthalaten das brennende Abtropfen dieser Formmassen beseitigt wird. Dabei treten die im Brandfall beim Einsatz von Tetrafluorethylenpolymerisaten üblichen Verformungen der Prüfkörper nicht auf. Die erfindungsgemäßen aromatischen Polyamide/Polyimidamide als Antidrippingmittel ermöglichen ferner vollkommen halogenfrei im Brandfall nicht tropfende und selbstverlöschende Formmassen.

Zur Erzielung dieser Antidrippingwirkung sind erfindungsgemäß aromatische Polyamide/Polyimidamide geeignet, die zum überwiegenden Teil, d.h. zu mehr als 50 Gew.-%, aus aromatischen Dicarbonsäuren und aromatischen Diaminen bestehen. Sie können als Fasern, wie sie bei technisch üblichen Herstellverfahren anfallen, als gemahlene Fasern, (feinteilige) Pulver und als auf Trägern niedergeschlagene aromatische Polyamide/Polyimidamide eingesetzt werden. Bevorzugt geeignet sind aromatische Polyamide/Polyimidamide mit Molekulargewichten von 2000 bis über 50 000 (Zahlenmittel).

Erfindungsgemäße aromatische Polyamide/Polyimidamide sind beispielsweise Polyamide/Polyimidamide, wie sie als Fasermaterialien nach Kirk-Othmer, Encyclopedia of Chemical Technology, Third Edition, Volume 3, S. 213 ff., definiert und mit ihren chemischen Strukturen aufgeführt sind.

Erfindungsgemäß sind auch Polyamid/Polyimidamide geeignet, die als Pulver, z.B. bei der Synthese nach dem Grenzflächenpolykondensationsverfahren ausfallen. Die Molekulargewichte (Zahlenmittel) dieser Produkte kann unter 50 000 bis zu 2000 liegen. Ihre bevorzugte Teilchengröße liegt bei 5 bis 20 $\mu$m.

Ferner sind erfindungsgemäß Polyamide/Polyimidamide besonders geeignet, die nach dem Grenzflächenverfahren oder nach dem Lösungsverfahren in Gegenwart von oberflächenreichen Füllstoffen oder feinteiligen Pfropfpolymerisaten synthetisiert werden und sich bevorzugt auf der Oberfläche des Trägermaterials abscheiden.

Die aromatischen Polyamide/Polyimidamide können auch Anteile unter 50 Gew.-% einer Gesamtmenge von aliphatischen Dicarbonsäuren und Diaminen enthalten, wie sie für die Synthese der technisch bekannten Polyamide Verwendung finden (siehe Ullmann's Encyclopädie der technischen Chemie, 4. Auflage, Band 19, S. 39 ff).

Die erfindungsgemäß als Antidrippingmittel geeigneten aromatischen Polyamide/Polyimidamide werden üblicherweise aus aromatischen Arylendicarbonsäuren und aromatischen Diaminen durch Lösungskondensation oder durch Grenzflächenkondensation hergestellt. Arylendicarbonsäuren sind insbesondere Phthalsäure, Isophthalsäure und Terephthalsäure. Geeignete aromatische Diamine sind beispielsweise o-Phenylendiamin, m-Phenylendiamin, p-Phenylendiamin, Diaminodiphenyle, in denen die Phenylbausteine über Heteroatome oder Gruppen verknüpft sind, entsprechend der Formel (I),

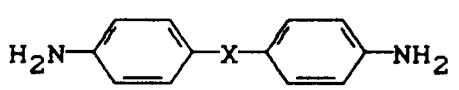

(I)

in welcher

X = -O-, -S-, $-SO_2-$, -CO-, $CH_2-$, $-C(CH_3)_2-$, $-CF_2-$.

Ferner sind Polyimidamide der Formel (II),

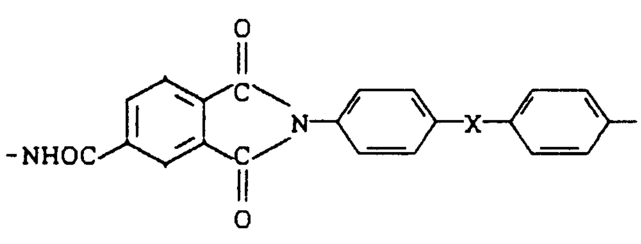

(II)

in welcher

X = $-CH_2-$, -O-,

geeignet.

Erfindungsgemäß sind auch Aramide geeignet, die Heterocyclenstruktur in der Hauptkette enthalten, wie Oxidazol-, Triazol-, Bisthiazol-, Benzimidazol-, Hydantoin- und Chinazolon-Strukturen (siehe Ullmann's

Encyclopädie der technischen Chemie, 4. Auflage, Band 11, S. 345 bis 350) und gegebenenfalls über entsprechende Dicarbonsäuren, Diamine oder Aminocarbonsäuren aufgebaut wurden.

Erfindungsgemäße aromatische Polyamide/Polyimidamide sind auch solche, die zu über 50 Gesamtgewichtsprozent aus vorgenannten aromatischen Polyamiden/Polyimidamiden bestehen und deren Rest (cyclo)-aliphatische Carbonsäuren und/oder (cyclo)aliphatische Diamine sind. Als aliphatische Dicarbonsäuren können beispielsweise Adipinsäure, 2,2,4- und 2,4,4-Trimethyladipinsäure, Azelainsäure, Sebazinsäure, Decandicarbonsäure und Dodecandicarbonsäure eingesetzt werden. Als aliphatische Diamine können beispielsweise Hexamethylendiamin, 2,2,4- und 2,4,4-Trimethylhexamethylendiamin, Diamino-dicyclihexylpropan-Isomere, Isophorondiamine und Xylylendiamine eingesetzt werden.

Die erfindungsgemäß geeigneten Polycarbonate gemäß Komponente A) können sowohl Homopolymerisate als auch Copolycarbonate aus den Diphenolen der Formel (III) sein,

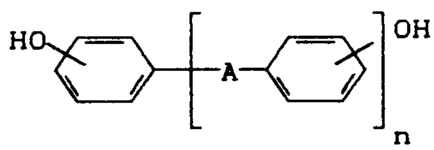

(III)

in welcher

n  1 oder Null ist und A die bei Formel (IIIa) angegebene Bedeutung hat.

Darüber hinaus können die Polycarbonate der Komponente A) insbesondere auch Copolycarbonate aus den Diphenolen (III) und (IIIa) sein,

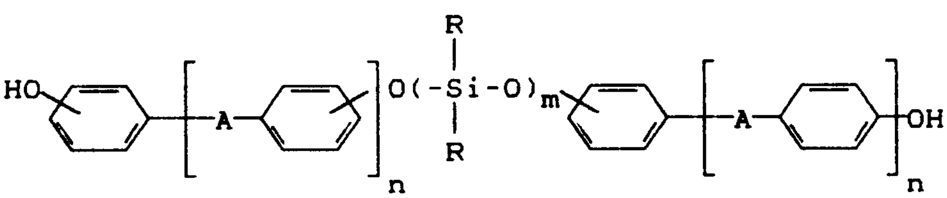

(IIIa)

worin A eine Einfachbindung, $C_1$-$C_5$-Alkylen, $C_2$-$C_5$-Alkyliden, ein $C_5$-$C_6$-Cycloalkyliden, -O-; -S-, $SO_2$-, die aromatischen Bereiche durch Methylgruppen oder Halogenatome substituiert sein können, n = 1 oder Null ist, die R's gleich oder verschieden und ein lineares $C_1$-$C_{20}$-Alkyl, verzweigtes $C_3$-$C_{20}$-Alkyl oder $C_6$-$C_{20}$-Aryl, wie beispielsweise Phenyl-$C_1$-$C_{10}$-alkyl sind und m eine Zahl zwischen 5 und 100, vorzugsweise zwischen 20 und 80 ist, und wobei der Gewichtsanteil an Diphenolen der Formel (IIIa) in den Copolycarbonaten jeweils so bemessen ist, daß der Gehalt an Diorganosiloxy-Einheiten (IV)

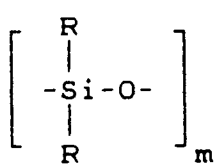

(IV)

in Polycarbonat A) zwischen 1 und 25 Gew.-%, vorzugsweise zwischen 2,5 und 25 Gew.-%, beträgt.

Die Polycarbonate gemäß Komponente A) können sowohl linear als auch verzweigt sein, sie können aromatisch gebundenes Halogen, vorzugsweise Brom und/oder Chlor enthalten, sie können aber auch frei von aromatisch gebundenem Halogen, also halogenfrei, sein.

Die Polycarbonate der Komponente A) können sowohl einzeln als auch im Gemisch eingesetzt werden. In den Fällen, in denen die Komponente A) ein Gemisch aus siloxanhaltigen Polycarbonaten und siloxanfreie Polycarbonaten ist, können die siloxanhaltigen Polycarbonate auch einen Gehalt an Diorganosiloxy-Einheiten von mehr als 25 Gew.-% enthalten, sofern durch die Abmischung mit den siloxanfreien Polycarbonaten der Gehalt im Polycarbonatgemisch wiederum zwischen 1 und 25 Gew.-% liegt.

Die Diphenole der Formel (III) sind entweder literaturbekannt oder nach literaturbekannten Verfahren herstellbar; Polydiorganosiloxane mit Hydroxyaryloxy-Endgruppen gemäß Formel (IIIa) sind ebenfalls bekannt (siehe z.B. US-Patent 3 419 634) bzw. nach literaturbekannten Verfahren herstellbar.

Die Herstellung der erfindungsgemäß geeigneten Polycarbonate gemäß Komponente A) ist literaturbekannt und kann z.B. mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. Die Darstellung von polydiorganosiloxanhaltigen Polycarbonaten ist z.B. in DE-OS 3 334 782 beschrieben.

Geeignete Kettenabbrecher sind z.B. Phenol oder p-tert.-Butylphenol, aber auch langkettige Alkylphenole wie 4-(1,3-Tetramethyl-butyl)phenol gemäß DE-OS 2 842 005 oder Monoalkylphenole oder Dialkylphenole mit insgesamt 8 bis 20 C-Atomen in den Alkylsubstituenten gemäß DE-OS 3 506 472, wie z.B. p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die Menge an einzusetzenden Kettenabbrechern beträgt im allgemeinen zwischen 0,5 und 10 Mol-%, bezogen auf die Summe der jeweils eingesetzten Diphenole (III) und (IIIa).

Die erfindungsgemäß geeigneten Polycarbonate gemäß Komponente A) können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, z.B. solchen mit drei oder mehr als drei phenolischen OH-Gruppen.

Sie haben mittlere Gewichtsmittelmolekulargewichte ($M_w$, gemessen z.B. durch Ultrazentrifugation oder Streulichtmessung) von 10 000 bis 200 000, vorzugsweise von 20 000 bis 80 000.

Geeignete Diphenole der Formel (III) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis(4-hydroxy-3,5-dichlorphenyl)propan, 2,2-Bis-(4-hydroxy-3,5-dibromphenyl)-propan, 1,1-Bis-(4-hydroxyphenyl)-cyclohexan oder 1,1-Bis-(4-hydroxyphenyl)-3,3,5-trimethylcyclohexan.

Bevorzugte Diphenole der Formel (III) sind 2,2-Bis-(4-hydroxyphenyl)propan und 1,1-Bis(4-hydroxyphenyl)-cyclohexan. Es können auch Mischungen von Diphenolen eingesetzt werden.

Geeignete Diphenole der Formel (IIIa) sind solche, in denen R Methyl, Ethyl, Propyl, n-Butyl, tert.-Butyl oder Phenyl insbesondere Methyl ist. Es können auch Mischungen von Diphenolen der Formel (IVa) eingesetzt werden.

Bevorzugte Diphenole der Formel (IIIa) sind die der Formel (IIIb)

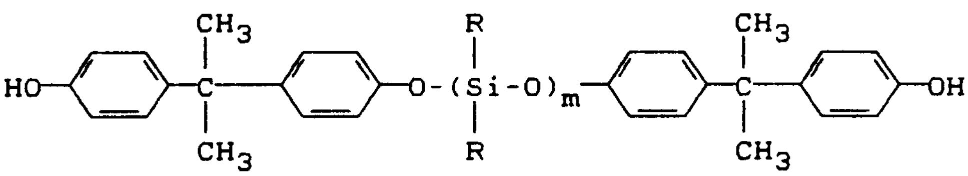

(IIIb)

worin die R's gleich sind und die vorstehend genannte Bedeutung haben und m eine ganze Zahl zwischen 5 und 100, vorzugsweise zwischen 20 und 80, ist.

Bevorzugte Polydiorganosiloxan-Polycarbonat-Blockcopolymere sind Copolycarbonate der Diphenole der Formel (III) mit Diphenolen der Formel (IIIb).

Erfindungsgemäß geeignete thermoplastische Copolymerisate gemäß Komponente B1) sind harzartig, thermoplastisch und kautschukfrei. Besonders bevorzugte Polymerisate sind solche aus Styrol, α-Methylstyrol, kernalkyliertem Styrol, Halogenstyrol oder Mischungen daraus mit Acrylnitril, Methacrylnitril, Alkylacrylat, Alkylmethacrylat, Maleinsäureanhydrid, N-substituiertem Maleinimid, Vinylacetat oder Mischungen daraus. Unter kernsubstituierten Styrolen sind kernalkylierte Styrole, wie z.B. p-Methylstyrol, zu verstehen.

Besonders bevorzugte Gewichtsverhältnisse im thermoplastischen Polymerisat sind z.B. 60 bis 80 Gew.-% Styrol, α-Methylstyrol, kernsubstituiertes Styrol, Halogenstyrol oder Mischungen daraus und 20 bis 40 Gew.-% Acrylnitril.

Die Polymerisate gemäß Komponente B1) sind bekannt und lassen sich durch Emulsions-, Suspensions-, Lösungs- oder Massepolymerisation herstellen. Die Polymerisate besitzen vorzugsweise Molekulargewichte $M_w$ (Gewichtsmittel, ermittelt durch Lichtstreuung oder Sedimentation) zwischen 15 000 und 200 000.

Die Polyalkylenterephthalate der Komponente B2) sind Reaktionsprodukte aus aromatischen Dicarbonsäuren oder ihren reaktionsfähigen Derivaten, wie Dimethylestern oder Anhydriden und aliphatischen, cycloaliphatischen oder araliphatischen Diolen sowie Mischungen dieser Reaktionsprodukte.

Bevorzugte Polyalkylenterephthalate enthalten mindestens 80, vorzugsweise mindestens 90 Gew.-%, bezogen auf die Dicarbonsäurekomponente Terephthalsäurereste und mindestens 80, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)propan, 2,4-Dihydroxy-1,1,3,3-tetramethyl-cyclobutan, 2,2-Bis-(3-β-hydroxyethoxyphenyl)-propan und 2,2-Bis(4-hydroxypropoxyphenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Polyalkylenterephthalat-Mischungen enthalten 1 bis 50, vorzugsweise 1 bis 30 Gew.-% Polyethylenterephthalat und 50 bis 99, vorzugsweise 70 bis 99 Gew.-% Polybutylenterephthalat.

Die vorzugsweise verwendeten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Tl.) bei 25 °C im Ubbelohde-Viskosimeter.

Die Polyalkylenterephthalate lassen sich nach bekannten Methoden herstellen (siehe z.B. Kunststoff-Handbuch, Band VIII, S. 695 ff., Carl Hanser Verlag, München, 1973).

Zur Herstellung der Pfropfpolymerisate gemäß Komponente C) geeignete Kautschuke sind insbesondere Polybutadiene, Polychloroprene, Polyisoprene, Styrol-Butadiencopolymerkautschuke, Acrylnitril-Butadien-Copolymerkautschuke mit Gelgehalten (gemessen bei 20 °C) größer als 30 Gew.-%, Acrylatkautschuke, EPDM(Ethylen-Propylen-Dien-Monomer)-Kautschuke und Siliconkautschuke. Geeignete Butadien-Styrol-Copolymerkautschuke können bis zu 30 Gew.-%, bezogen auf Kautschukgewicht, eines niederen Alkylesters von Acryl- oder Methacrylsäure (beispielsweise Methylmethacrylat, Ethylacrylat, Methylacrylat) enthalten.

Geeignete Alkylacrylatkautschuke sind solche auf Basis von $C_1$-$C_8$-Alkylacrylaten, insbesondere Ethyl-, Butyl-, Ethylhexylacrylat. Diese Alkylacrylatkautschuke können gegebenenfalls bis zu 30 Gew.-%, bezogen auf Kautschukgewicht, Monomere wie Vinylacetat, Acrylnitril, Styrol, kernalkyliertes Styrol, Halogenstyrol, Methylmethacrylat und/oder Vinylether copolymerisiert enthalten. Diese Alkylacrylatkautschuke können weiterhin kleinere Mengen, vorzugsweise bis zu 5 Gew.-%, bezogen auf Kautschukgewicht, vernetzend wirkender ethylenisch ungesättigter Monomerer enthalten. Solche Vernetzer sind z.B. Alkylendioldi(meth)-acrylate, Polyesterdi-(meth)-acrylate, Divinylbenzol, Trivinylbenzol, Triallylcyanurat, Allyl-(meth)-acrylat, Butadien oder Isopren. Solche Alkylacrylate sind bekannt. Acrylatkautschuke als Pfropfgrundlage können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomeren, wie Styrol und/oder Acrylnitril, als Kern enthalten.

Die erfindungsgemäß geeigneten Siliconkautschuke enthalten in dispergierter Form wenigstens teilvernetzte, teilchenförmige Siliconkautschuke mit im wesentlichen chemisch eingebauten Gruppen der allgemeinen Formeln

a) $R_2SiO_{2/2}$, $RSiO_{3/2}$, $R_2R^3SiO_{1/2}$, $SiO_{4/2}$ und gegebenenfalls Gruppen der Formel

b) $R^1CH=CH-(R^2)-$, gegebenenfalls in Kombination mit SH-Gruppen

wobei

R = einwertiger, gesättigter Kohlenwasserstoffrest, insbesondere $-CH_3$, $-C_6H_5$, gegebenenfalls durch -SH, Halogen, $-C_1$-$C_6$-Oxalkyl substituiert,

$R^1$ = H, $C_1$-$C_6$-Alkyl, insbesondere H, $CH_3$,

$R^2$ = Einfachbindung, $C_1$-$C_4$-Alkylen, insbesondere $-CH_2-$, $-C_2H_4-$ und
$R^3$ = R oder OH sind.

Die Mengen der einzelnen Siloxaneinheiten sind dabei so bemessen, daß auf 100 Mol-Einheiten der Formel $R_2SiO_{2/2}$ 0 bis 0,5 Mol-Einheiten $R_2R^3SiO_{1/2}$, 0 bis 10 Mol-Einheiten der Formel $RSiO_{3/2}$ und 0 bis 3 Mol-Einheiten der Formel $SiO_{4/2}$ vorhanden sind. In bevorzugten Siliconkautschuken sind mindestens 80 % aller Reste R $CH_3$-Gruppen.

Im Falle der Gruppe $R_2R^3SiO_{1/2}$ ist des weiteren möglich, daß einer der drei Reste R eine Hydroxylgruppe darstellt. Besonders bevorzugte Endgruppe ist die Dimethylhydroxysiloxyeinheit.

Die Siliconkautschuke enthalten die Gruppen b) in Mengen von 2 bis 10 Mol-%, bezogen auf die Gesamtheit aller Reste R.

Bevorzugte Kautschuke zur Herstellung der Pfropfpolymerisate C) sind Dien-, Alkylacrylat- und Siliconkautschuke.

Die Kautschuke liegen in den Pfropfpolymerisaten C) in Form wenigstens partiell vernetzter Teilchen einer mittleren Teilchengröße von 0,1 bis 3,0 µm, insbesondere 0,2 bis 0,6 µm vor. Sie sind wenigstens teilvernetzt, d.h. sie besitzen Gelgehalte von größer 20 Gew.-%, besonders größer 50 Gew.-%, besonders bevorzugt im Bereich von 73 bis 98 Gew.-%.

Die Pfropfpolymerisate C) werden durch radikalische Pfropfcopolymerisate der eingangs definierten Monomergemische aus C.1.1) und C.1.2) in Gegenwart der zu pfropfenden Kautschuke C.2) hergestellt und sind durchweg bekannt. Bevorzugte Herstellungsverfahren für die Pfropfpolymerisate C) sind Emulsions-, Lösungs-, Masse- oder Suspensionspolymerisation. Besonders bevorzugte Pfropfpolymerisate C) sind die sogenannten ABS-Polymerisate.

Erfindungsgemäße Phosphorsäureester von Phenolen, Bisphenolen und/oder Polyphenolen gemäß Komponente D) sind solche der Formeln (V) bis (VIII):

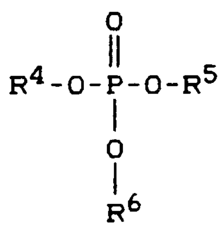

(V),

worin $R^4$, $R^5$ und $R^6$ gleich oder verschieden und $C_1$-$C_{20}$-Kohlenwasserstoffreste sind, wobei mindestens zwei der Reste $R^4$, $R^5$ und $R^6$ substituierte oder unsubstituierte Arylreste darstellen (siehe DE-OS 3 429 481 und DE-OS 3 430 234). Als Substituenten seien Methyl, Ethyl, n- und iso-Propyl genannt.

Beispiele für Phosphorverbindungen der Formel (V) sind Triphenylphosphat, Trikresylphosphat, Diphenyl-2-ethylphenylphosphat, Tri-(isopropylphenyl)-phosphat.

Erfindungsgemäße Phosphorsäureester sind ferner Verbindungen der Formel (VI)

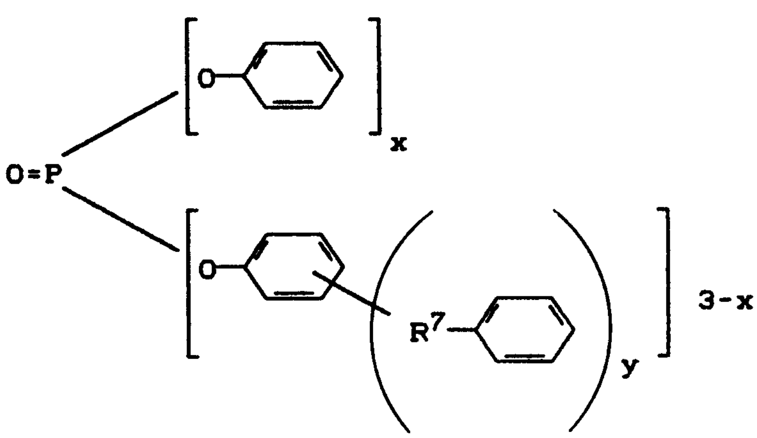

(VI),

worin

$R^7$ eine direkte Bindung, eine $-CH_2-$,

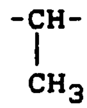

oder

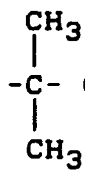 Gruppe ist,

x gleich 0 oder 1 oder 2 für den Fall, daß y gleich 1 ist oder

x gleich 2 für den Fall, daß y gleich 2 ist

und die Aromaten auch durch $C_1$-$C_4$-Alkyl substituiert sein können (siehe DE-OS 3 824 356).

Beispiele für Phosphorverbindungen der Formel (VI) sind Phosphorsäure-bis-phenyl-(4-phenylphenyl)-ester, Phosphorsäure-phenyl-bis-(4-phenylphenyl)-ester, Phosphorsäure-tris-(4-phenylphenyl)-ester, Phosphorsäure-bis-phenyl-(benzylphenyl)-ester, Phosphorsäure-phenyl-bis-(benzylphenyl)-ester, Phosphorsäure-tris-(benzylphenyl)-ester, Phosphorsäure-bis-phenyl-(1-phenylethyl)-phenyl)-ester, Phosphorsäure-phenyl-bis-((1-phenylethyl)-phenyl)-ester, Phosphorsäure-tris-((1-phenylethyl)-phenyl)-ester, Phosphorsäure-bis-phenyl-((1-methyl-1-phenylethyl)-phenyl-ester, Phosphorsäure-phenyl-bis-((1-methyl-1-phenylethyl)-phenyl-ester, Phosphorsäure-tris-((1-methyl-1-phenylethyl)-phenyl)-ester, Phosphorsäure-phenyl-bis-(4-(1-phenylethyl)-2,6-dimethylphenyl)-ester, Phosphorsäure-bis-phenyl-2,4-di-benzylphenyl-ester, Phosphorsäure-bis-phenyl-2,4-di-(1-phenylethyl)-phenylester und Phosphorsäure-bis-phenyl-2,4-di-(1-methyl-1-phenylethyl)-phenylester.

Speziell bevorzugt sind der Phosphorsäure-phenyl-bis-(4-phenylphenyl)-ester, Phosphorsäure-bis-phenyl-((1-phenylethyl)-phenyl)-ester, Phosphorsäure-phenyl-bis-((1-phenylethyl)-phenyl)-ester, Phosphorsäure-bis-phenyl-((1-methyl-1-phenylethyl)-phenyl)-ester, Phosphorsäure-phenyl-bis-((1-methyl-1-phenylethyl)-phenyl)-ester, Phosphorsäure-tris-((1-methyl-1-phenylethyl)-ester, Phosphorsäure-phenyl-bis-(benzylphenyl)-ester und der Phosphorsäure-bis-phenyl-2,4-di-(1-methyl-1-phenylethyl)-phenyl-ester und ihre Mischungen.

Erfindungsgemäße Phosphorsäureester sind ferner solche der Formel VIIa und VIIb

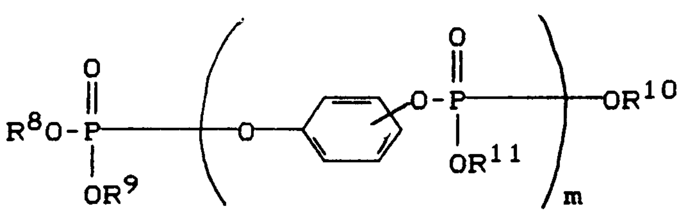

(VIIa),

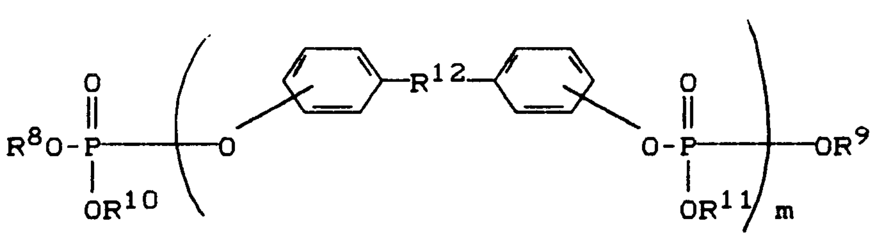

(VIIb),

worin

$R^8$, $R^9$, $R^{10}$ und $R^{11}$ gleiche oder verschiedene, mit $C_1$-$C_4$-Alkyl- oder Aralkylgruppen wie beispielsweise Phenyl-$C_1$-$C_6$-alkyl substituierte Arylreste,

$R^{12}$ eine einfache Kohlenstoff/Kohlenstoff-Bindung, -O-, -S-, $SO_2$-, -CO-, -$CH_2$-, -C-$(CH_3)_2$- oder ein Kohlenstoffatom, an das biradikalische Cyclohexyl- bzw. 3,3,5-Trimethylcyclohexyl-Gruppen gebunden sind, und

m ganze Zahlen zwischen 0 und 10 darstellen.

Beispiele für Phosphorverbindungen der Formel (VIIa und VIIb) sind die Phosphorsäureester von 1,4-Dihydroxy-benzol (Hydrochinon), 1,3-Dihydroxy-benzol (Resorcin), 4,4'-Dihydroxydiphenyl, Bis-(4-hydroxyphenyl).methan (Bisphenol F), 2,2-Bis-(4-hydroxyphenyl)-propan (Bisphenol A) und 1,1-Bis-(4-hydroxyphenyl)-cyclohexan und 1,1-Bis-(4-hydroxyphenyl)-3,3,5-trimethylcyclohexan.

Erfindungsgemäße Phosphorsäureester sind ferner solche der Formel (VIII)

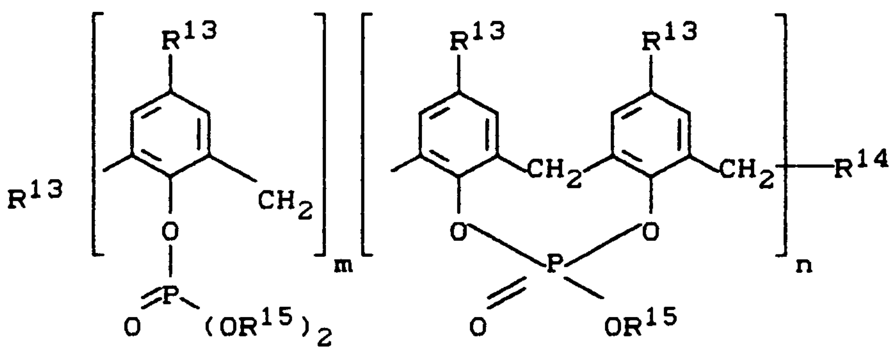

(VIII)

worin

$R^{13}$ Wasserstoff oder Alkyl mit 1 bis 8 Kohlenstoffatomen, bevorzugt Methyl,

$R^{14}$

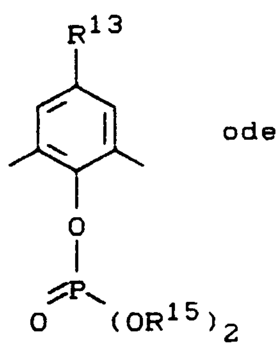

oder

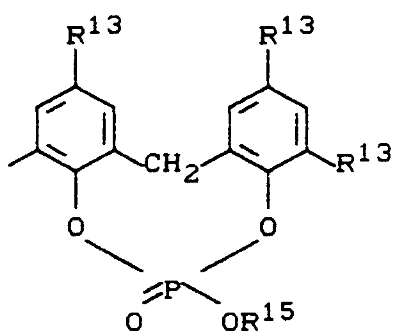

$R^{15}$ Phenyl, wobei dieses durch Alkyl mit 1 bis 4 Kohlenstoffatomen, Aryl wie beispielsweise Phenyl, und oder Aralkyl wie beispielsweise, Benzyl oder 2-Phenyl-ethyl, substituiert sein kann, sind,

worin bei m gleich null n mindestens 1

und $R^{14}$ gleich

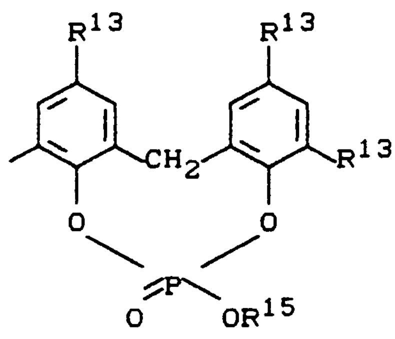

sein muß,
worin bei n gleich null m mindestens 2 und $R^{14}$ gleich

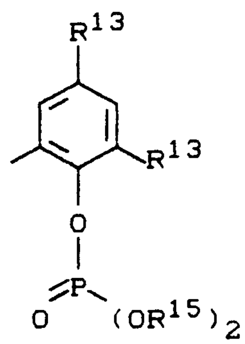

sein muß, und worin
m eine ganze Zahl von Null bis 12 und
n eine ganze Zahl von Null bis 5 sind,
wobei die Kernzahl des Polyphenolmoleküls, also die Zahl der Benzolringe der Verbindung (VIII), ohne die Reste $R^{13}$ bis $R^{15}$ nicht höher als 12 ist.

Beispiele für Phosphorsäureester nach Formel (VIII) sind die Phosphorsäureester von Novolaken. Geeignete Novolake sind Kondensationsprodukte aus Formaldehyd und Phenolen der allgemeinen Formel (IX)

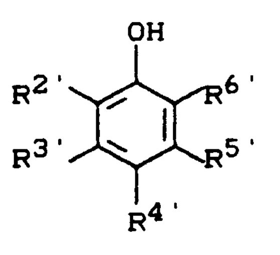

(IX)

worin $R^{2'}$ und $R^{6'}$ Wasserstoffatome bezeichnen und $R^{3'}$, $R^{4'}$ und $R^{5'}$ wahlweise gleich Wasserstoff, Halogen oder $C_1$-$C_{20}$-Alkyl-, $C_4$-$C_7$-Cycloalkyl-, $C_6$-$C_{10}$-Aryl-Gruppen wie Phenyl oder Naphthyl sein können oder worin $R^{2'}$ und$R^{4'}$ Wasserstoffatome bezeichnen und $R^{3'}$, $R^{5'}$ und $R^{6'}$ gleich den obengenannten Resten sein können.

Charakteristische Beispiele für Phenole sind, ohne damit eine Einschränkung zu treffen, Phenol, o-Kresol, m-Kresol, p-Kresol, 2,5-Dimethyl-, 3,5-Dimethyl-, 2,3,5-Trimethyl-, 3,4,5-Trimethyl-, p-t-Butyl-, p-n-Octyl-, p-Stearyl-, p-Phenyl-, p-(1-Phenylethyl)-, 1-Phenylethyl-, o-Isopropyl-, p-Isopropyl-, m-Isopropylphenol sowie zahlreiche andere Phenole.

Bevorzugt eingesetzt werden Phenol, o-Kresol, m-Kresol, p-Kresol, p-t-Butylphenol und o-t-Butylphenol

und p-Octylphenol.

Es können aber auch Gemische aus diesen Phenolen eingesetzt werden.

Bevorzugt eingesetzte Novolake sind demnach, ohne damit eine Einschränkung zu treffen:
Phenol/Formaldehyd-Novolak,
o-Kresol/Formaldehyd-Novolak,
m-Kresol/Formaldehyd-Novolak,
p-Kresol/Formaldehyd-Novolak,
t-Butylphenol/Formaldehyd-Novolak,
o-Octylphenol/Formaldehyd-Novolak.

Besonders bevorzugt wird der p-Kresol/Formaldehyd-Novolak.

Zur Herstellung der Ester werden im sogenannten Umesterungsverfahren Novolake mit Triarylestern der Phosphorsäure und im sogenannten Säurechloridverfahren Gemische von Novolaken und Phenolen mit Phosphoroxychlorid zur Umsetzung gebracht. Beim Umesterungsverfahren wird bevorzugt Triphenylphosphat eingesetzt. Bei beiden Verfahren können als zusätzliche Phenole Aryl- und Aralkylphenole wie 4-Phenylphenol, Benzylphenol, 1-Phenylethyl-phenol, 1-Methyl-1-phenylethyl-phenol und 2,4-Di-(phenylethyl)-phenol mitverwendet werden.

Als Besonderheit bei den Phosphorsäureestern von Novolaken ist festzustellen, daß auf Grund der Mehrwertigkeit der Phosphorsäure wie auch der von Novolaken sowohl offene als auch cyclische Strukturen auftreten können, he nach dem, ob jeweils eine Valenz oder 2 Valenzen jeweils eines Moleküls miteinander reagiert haben. Vernetzungsreaktionen auf Grund der Mehrwertigkeit der Reaktionspartner treten üblicherweise nicht auf.

Erfindungsgemäß geeignete Phosphorverbindungen gemäß Formel (VIII) sind beispielsweise die Umsetzungsprodukte aus 1 Mol Triphenylphosphat bzw. Phosphorsäuretrichlorid und 1 oder 2 Äquivalent Novolak. Mengenverhältnisse zwischen 1 und 2 Äquivalent Novolak sind ebenfalls möglich. Die 3. Valenz der Phosphorsäure ist, wie oben dargestellt, an Phenol oder ein substituiertes Phenol gebunden.

Die erfindungsgemäß geeigneten Phosphorverbindungen gemäß Formel (VIII) sind generell nach bekannten Verfahren herstellbar (siehe für Novolake: Houben-Weyl, Methoden der organischen Chemie, Band XIV/2, Seiten 193 bis 292, und Ullmanns Encyclopädie der technischen Chemie, 4. Auflage, Band 18, Seiten 245 bis 257; für Phosphate: beispielsweise Ullmanns Encyclopädie der technischen Chemie, 4. Auflage, Bd. 18, Seiten 389 bis 391, 1979 und Houben-Weyl, Methoden der organischen Chemie, Bd. 12/1, S. 299 bis 374).

Es können auch Mischungen der Phosphorverbindungen der Formeln (V) bis (VIII) eingesetzt werden.

Die erfindungsgemäßen thermoplastischen Formmassen können weitere Thermoplasten wie Polysulfone, Polyethersulfone, Polyketone, Polyetherketone, Polyphenylenether, Polyarylensulfide sowie weitere Zusätze wie Stabilisatoren, Pigmente, Fließmittel, Entformungsmittel, Antistatika und/oder als andere Flammschutzadditve Metall- und Halogenverbindungen sowie weitere Antidrippingmittel wie Polytetrafluorethylenpolymerisate und/oder Siliconkautschuke und Salze von Sulfonsäuren enthalten.

Gegenstand der vorliegenden Erfindung sind somit auch Polycarbonatformmassen enthaltend die Komponenten A), C), D), E) und gegebenenfalls B), thermoplastische Polysulfone, thermoplastische Polyethersulfone, thermoplastische Polyketone, thermoplastische Polyetherketone, thermoplastische Polyphenylenether und/oder thermoplastische Polyarylensulfide, ferner Stabilisatoren, Pigmente, Füllstoffe, Verstärkungsmittel, Fließmittel, Entformungsmittel, Antistatika, und/oder als andere Flammschutzmittel Metall- und Halogenverbindungen sowie weitere Antidrippingmittel und Salze von Sulfonsäuren.

Die erfindungsgemäßen thermoplastischen Formmassen enthaltend die Komponenten A), C), D), E) sowie gegebenenfalls B), thermoplastische Polysulfone, thermoplastische Polyethersulfone, thermoplastische Polyketone, thermoplastische Polyetherketone, thermoplastische Polyphenylenether und/oder thermoplastische Polyarylensulfide, ferner Stabilisatoren, Pigmente, Fließmittel, Entformungsmittel, Antistatika und/oder als andere Flammschutzmittel Metall- und Halogenverbindungen sowie weitere Antidrippingmittel und Salze von Sulfonsäuren werden hergestellt, indem man die jeweiligen Bestandteile in bekannter Weise vermischt und bei Temperaturen von 200 bis 330 °C in üblichen Aggregaten wie Innenknetern, Extrudern oder Doppelwellenschnecken schmelzcompoundiert oder schmelzextrudiert, oder indem man die Lösungen der jeweiligen der vorstehend genannten Bestandteile in geeigneten organischen Lösungsmitteln, beispielsweise in Chlorbenzol, mischt und die Lösungsgemische in üblichen Aggregaten, beispielsweise in Eindampfextrudern, eindampft.

Die Vermischung der einzelnen Bestandteile kann in bekannter Weise sowohl sukzessiv als auch simultan erfolgen, und zwar sowohl bei etwa 20 °C (Raumtemperatur) als auch bei höherer Temperatur.

Gegenstand der vorliegenden Erfindung ist somit auch ein Verfahren zur Herstellung von thermoplastischen Polycarbonatformmassen enthaltend die Komponenten A), C), D), E) und gegebenenfalls B), Polysulfone, Polyethersulfone, Polyketone, Polyetherketone, Polyphenylenether und/oder Polyarylensulfide, ferner Stabilisatoren, Pigmente, Fließmittel, Entformungsmittel, Antistatika, und/oder als andere Flammschutzmittel Metall- und Halogenverbindungen sowie weitere Antidrippingmittel und Salze von Sulfonsäuren, das dadurch gekennzeichnet ist, daß man die jeweiligen der vorstehend genannten Bestandteile in bekannter Weise vermischt und danach bei Temperaturen von 200 °C bis 330 °C in üblichen Aggregaten schmelzcompoundiert oder schmelzextrudiert, oder daß man die Lösungen der jeweiligen der vorstehend genannten Bestandteile in geeigneten organischen Lösungsmitteln mischt und die Lösungsmittelgemische in geeigneten Aggregaten eindampft.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind Gehäuseteile jeder Art, Abdeckplatten für den Bausektor oder Teile für den Kfz-Sektor. Sie werden außerdem auf dem Gebiet der Elektrotechnik eingesetzt, weil sie sehr gute elektrische Eigenschaften besitzen.

Teilchengröße bedeutet immer mittlerer Teilchendurchmesser $d_{50}$, ermittelt durch Ultrazentrifugenmessungen nach W. Scholtan et al., Kolloid-Z. u. Z. Polymere 250 (1972) 782 bis 796.

## Beispiele

### A. Eingesetzte Komponenten

I. Aromatisches Polycarbonat aus 100 Gew.-% Bisphenol A mit relativer Viskosität, gemessen in Methylenchlorid bei 25 °C, von 1,284 (0,5 gew.-%ige Lösung).

II. Thermoplastisches Polymerisat aus Styrol und Acrylnitril mit einem Acrylnitrilgehalt von 29 Gew.-% und einem mittleren Molekulargewicht von 60 000.

III. ABS-Pfropfpolymerisat von 50 Gew.-% Styrol-Acrylnitrilgemisch (im Verhältnis 72:28) auf 50 Gew.-% teilchenförmigem, Polybutadien eines mittleren Teilchendurchmessers ($d_{50}$) von 0,4 $\mu$m, erhalten durch Emulsionspolymerisation.

IV. 10 Gew.-% Polytetrafluorethylen enthaltendes Polymerisat nach III dadurch hergestellt, daß das ABS-Pfropfpolymerisat als Latex und das Polytetrafluorethylen als Dispersion gemischt, koaguliert und als Cofällung gemeinsam aufgearbeitet werden.

V. Aramidfaser (Kevlar® 29 der Dupont de Nemours, USA).

VI. Triphenylphosphat.

VII. Gemisch von Phosphorsäure-bis-phenyl-2,4-di-(1-phenylethyl)-phenyl-ester und Phosphorsäure-phenyl bis-((1-phenylethyl)-phenyl)-ester (vgl. Beispiel 2 der DE-OS 39 40 927).

VIII. Phosphorsäureester aus 2 Mol Triphenylphosphat und 1 Mol 4,4'-Dihydroxydiphenylmethan (Bisphenol F) durch Umesterung.

Herstellung:

2 284,0 g (7,0 Mol) Triphenylphosphat, 707,7 g (7 Gramm äquiv.) 4,4'-Dihydroxidiphenylmethan (Bisphenyl F) (OH-Zahl 555) und 20,0 g (0,18 Mol) Magnesiumchlorid werden in einem 6 l-Kolben, der mit regelbarer Pilzheizhaube, Kapillare und kurzer Vigreux-Kolone mit absteigendem Kühler versehen ist, nach Aufschmelzen 0,5 Stunden lang bei einem Vakuum von 300 mbar bei 200 °C erhitzt. Der über die Kapillare eingeleitete Stickstoffstrom sorgt für gute Durchmischung. Anschließend werden in 4 Stunden bei fallendem Vakuum von 300 bis 3 mbar und Temperaturen von 200 bis 210 °C über Kolonne und Kühler 661,2 g Produkt (OH-Zahl 590) abdestilliert (7 Mol Phenol: 658,7 g). Anschließend wird 1 Stunde bei 230 °C und einem Vakuum von 3 mbar ausgeheizt.

Nach Abkühlen wird das Reaktionsprodukt in 5 l Methylenchlorid aufgenommen und mit Wasser chloridfrei gewaschen. Nach Trocknen der Methylenchlorid-lösung mit Natriumsulfat wird filtriert und die Lösung eingeengt. Die Ausbeute beträgt 2296,0 g = 98,7 % der Theorie. Das Produkt ist harzig. Der Phosphorgehalt beläuft sich auf 9,2 % (theoretisch 9,3 %) und die OH-Zahl auf O.

IX. Phosphorsäureester aus 1 Mol Triphenylphosphat und 1 Äquivalent Novolak (aus p-Kresol, Kernzahl ca. 5) durch Umesterung.

Herstellung:

1.142,0 g (3,5 Mol) Triphenylphosphat, 839,3 g (7 Gramm äquiv.) eines Novolaks aus p-Kresol und Formaldehyd (OH-Zahl 468, Kernzahl ca. 5) und 10,0 g Magnesiumchlorid (0,09 Mol) werden in einem 4 l-Kolben, der mit regelbarer Pilzheizhaube, Kapillare und kurzer Vigreux-Kolonne mit absteigendem Kühler versehen ist, nach Aufschmelzen 0,5 Stunden lang bei einem Vakuum von 300 mbar bei 200 °C erhitzt. Der über die Kapillare eingeleitete Stickstoffstrom sorgt für gute Durchmischung. Anschließend werden in 4 Stunden bei fallendem Vakuum von 300 bis 3 mbar und Temperaturen von 200 bis 210 °C über Kolonne und Kühler 681,7 g Produkt (OH-Zahl 550) abdestilliert (7 Mol Phenol: 658,7 g). Anschließend wird 1 Stunde bei 210 °C und einem Vakuum von 3 mbar ausgeheizt.

Nach Abkühlen wird das Reaktionsprodukt in 4 l Methylenchlorid aufgenommen und mit Wasser chloridfrei gewaschen. Nach Trocknen der Methylenchlorid-Lösung mit Natriumsulfat wird filtriet und die Lösung eingeengt. Die Ausbeute beträgt 1.304,7 g = 98,6 % der Theorie. Der Erweichungsbeginn liegt auf der Kofler-Heizbank bei 141 °C, der Phosphorgehalt beläuft sich auf 8,2 % (theoretisch 8,2 %) und die OH-Zahl auf O.

Herstellung und Prüfung der Formmassen, Ergebnisse:

Auf einem Banbury-Innenkneter (Fa. Pomini-Farrel) vom Typ BR (1,2 l) oder Typ OOC (3 l) werden die jeweils benötigten Bestandteile bei 230 bis 240 °C in den in Tabelle 1 angegebenen Mengen (Angaben in Gewichtsteilen) gemischt und zu Granulat aufgearbeitet.

Tabelle 1 Eingesetzte Komponenten (Angaben in Gew.-%)

| Komponente | Komponente A (Polycarbonat) I. | Komponente B (Copolymer) II. | Komponente C (ABS-Pfropfpolymer) III. | ABS-Pfropfpolymer und Polytetrafluorethylen IV. | Komponente E Aramid V. | Komponente D Phosphorsäureester VI. | VII. | VIII. | IX. |
|---|---|---|---|---|---|---|---|---|---|
| Vergleich 1 | 70,0 | 6,0 | 11,0 | | | 13,0 | | | |
| Vergleich 2 | 70,0 | 6,0 | 7,0 | 4,0 | | 13,0 | | | |
| Beispiel 1 | 70,0 | 5,5 | 11,0 | | 0,5 | 13,0 | | | |
| Beispiel 2 | 70,0 | 2,5 | 11,0 | | 0,5 | | 16,0 | | |
| Beispiel 3 | 70,0 | 2,5 | 11,0 | | 0,5 | | | 16,0 | |
| Beispiel 4 | 70,0 | 2,5 | 11,0 | | 0,5 | | | | 16,0 |

Die Formmassen werden bei 260 °C zu Prüfkörpern spritzgegossen (Aggregat: Werner Pfleiderer Schnecke DKS 275, Schließkraft 275 MP, Schneckendurchmesser 56 mm, Länge L/D-23/1) und folgenden Tests bzw. Beurteilungen unterzogen:

- Schlagzähigkeit nach DIN 43 543 ($a_n$),
- Wärmeformbeständigkeit nach DIN 53 460 (Vicat B),

- Brandtest nach Vorschrift Underwriter Laboratories (UL 94),
- Beurteilung des Tropfens,
- Beurteilung bei der Verformung bei Beflammung.

Tabelle 2 zeigt die erhaltenen Prüfdaten.

**Tabelle 2: Prüfdaten**

| | $a_n$ kJ/m² | Vicat B °C | Tropfen | UL 94 Stabdicke: 2 mm | 3 mm | Verformung bei Beflammung |
|---|---|---|---|---|---|---|
| Vergleich 1 | n.g. | 90 | ja | V-2 | V-2 | nein |
| Vergleich 2 | n.g. | 90 | nein | V-0 | V-0 | ja |
| Beispiel 1 | n.g. | 93 | nein | V-1 | V-0 | nein |
| Beispiel 2 | n.g. | 91 | nein | V-1 | V-1 | nein |
| Beispiel 3 | n.g. | 94 | nein | V-1 | V-0 | nein |
| Beispiel 4 | n.g. | 130 | nein | - | V-1 | nein |

* n.g. = nicht gebrochen

Aus den Tabellen 1 und 2 geht hervor, daß die erfindungsgemäßen Formmassen (Beispiele 1 bis 4) mit einem erfindungsgemäßen aromatischen Polyamid als Antidrippingmittel und mit Phosphaten von Phenolen, Bisphenol und Novolak bei der Prüfung des Brandverhaltens nicht tropfen und enstprechend UL94 V-1 bzw. V-0 bei 2 bzw. 3 mm dicken Prüfkörpern erhalten, d.h. ein gutes Brandverhalten aufweisen, und sich bei Beflammung praktisch nicht verformen. Im Gegensatz dazu zeigen die Vergleichsbeispiele entweder ein deutlich schlechteres Brandverhalten (Vergleich 1 tropft und hat einen UL94-Wert V2) oder sie verformen sich bei Beflammung.

## Patentansprüche

1. Thermoplastische Polycarbonatformmassen enthaltend
A) 40 bis 90 Gew.-Teile eines thermoplastischen aromatischen Polycarbonats,
B) 0 bis 80 Gew.-Teile eines Copolymerisats bzw. Polykondensats bestehend aus
B.1) 0 bis 50 Gew.-Teilen eines thermoplastischen Copolymerisats aus 50 bis 95 Gew.-% Styrol, $\alpha$-Methylstyrol, kernalkyliertem Styrol, Halogenstyrol oder Mischungen daraus und 5 bis 50 Gew.-% Acrylnitril, Methacrylnitril, Alkylacrylat, Alkylmethacrylat, Maleinsäureanhydrid, N-substituiertem Maleinimid, Vinylacetat oder Mischungen daraus und/oder
B.2) 0 bis 80 Gew.-Teilen eines thermoplastischen Polyalkylenterephthalats,
C) 1 bis 25 Gew.-Teile Pfropfpolymerisat hergestellt aus
C.1) 5 bis 90 Gew.-Teilen einer Mischung aus:
C.1.1) 50 bis 95 Gew.-% Styrol, $\alpha$-Methylstyrol, Halogenstyrol, kernalkyliertem Styrol, Methylmethacrylat oder Mischungen daraus, und
C.1.2) 5 bis 50 Gew.-% (Meth)Acrylnitril, Methylmethacrylat, Maleinsäureanhydrid, N-substituiertem Maleinimid oder Mischungen daraus, auf
C.2) 10 bis 95 Gew.-Teilen eines Kautschuks mit einer Glastemperatur TG $\leqq 10\,°C$,
D) 1 bis 30 Gew.-Teile Phosphorsäureester von Phenolen, Bisphenolen und/oder Polyphenolen,
E) 0,05 bis 5 Gew.-Teile Antidrippingsmittel,
wobei das Gesamtgewicht 100 Gew.-Teile A + B + C + D + E ergeben soll, dadurch gekennzeichnet, daß sie als Antidrippingmittel E) aromatische Polyamide bzw. Polyimidamide (Aramide) in Form von Fasern, Pulvern oder auf Trägern niedergeschlagen enthalten.

2. Formmassen gemäß Anspruch 1, dadurch gekennzeichnet, daß die aromatischen Polyamid/Polyimidamide mehr als 50 Gew.-% aromatische Aufbaukomponenten aufweisen.

3. Formmassen gemäß Anspruch 1, dadurch gekennzeichnet, daß die aromatischen Polyamid/Polyimidamide mehr als 85 Gew.-% aromatische Aufbaukomponenten aufweisen.

4. Formmassen gemäß Anspruch 1, dadurch gekennzeichnet, daß die aromatischen Polyamid/Polyimidamide als, gegebenenfalls gemahlene Aramidfasern eingesetzt werden.

5. Formmassen gemäß Anspruch 1, dadurch gekennzeichnet, daß die aromatischen Polyamid/Polyimidamide als Pulver, wie sie bei der Synthese von aromatischen Polyamid/Polyimidamiden nach dem Grenzflächenverfahren ausfallen, eingesetzt werden.

6. Formmassen gemäß Anspruch 1, dadurch gekennzeichnet, daß die aromatischen Polyamid/Polyimidamide auf Oberflächen von Trägern niedergeschlagen eingesetzt werden.

7. Formmassen gemäß Anspruch 1, dadurch gekennzeichnet, daß die aromatischen Polyamid/Polyimidamide zusammen mit aromatischen Estern der Phosphorsäure wie Phenyl-, Bisphenol- und Novolakestern in einer Flammschutzmittelkombination eingesetzt werden.

8. Formmassen gemäß Anspruch 1, dadurch gekennzeichnet, daß als aromatische Ester der Phosphorsäure solche der Formeln (V) bis (VIII) verwendet werden:

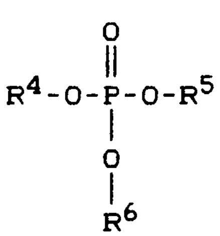

(V),

worin $R^4$, $R^5$ und $R^6$ gleich oder verschieden und $C_1$-$C_{20}$-Kohlenwasserstoffreste sind, wobei mindestens zwei der Reste $R^4$, $R^5$ und $R^6$ substituierte oder unsubstituierte Arylreste darstellen,

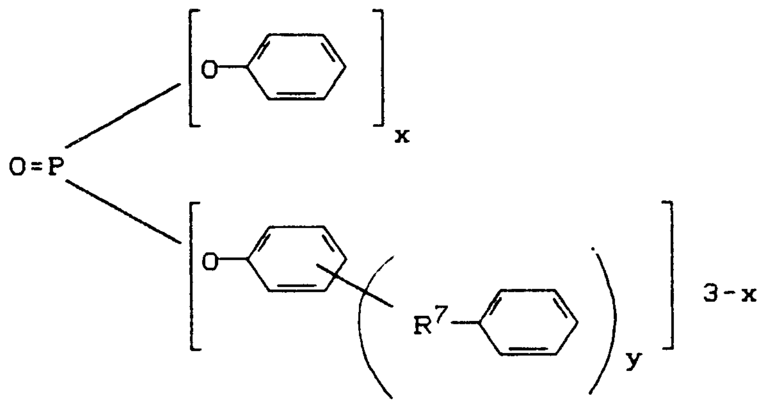

(VI),

worin

$R^7$ eine direkte Bindung, eine $-CH_2-$,

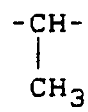

oder

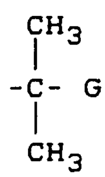 Gruppe ist,

x gleich 0 oder 1 oder 2 für den Fall, daß y gleich 1 ist oder

x gleich 2 für den Fall, daß y gleich 2 ist

und die Aromaten auch durch $C_1$-$C_4$-Alkyl substituiert sein können,

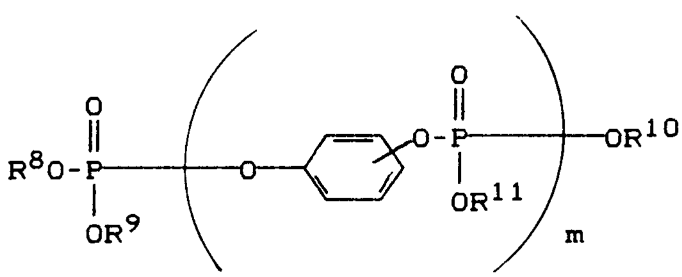

(VIIa),

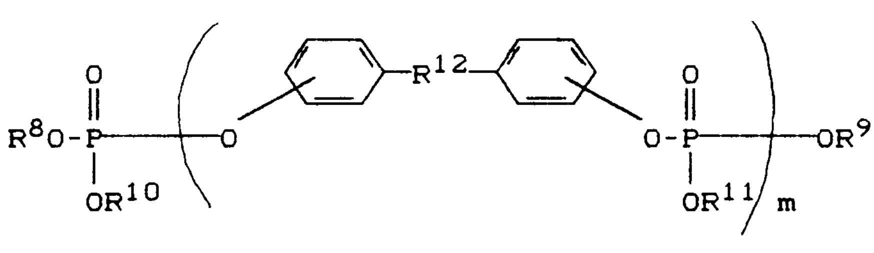

(VIIb),

worin

| | |
|---|---|
| $R^8$, $R^9$, $R^{10}$ und $R^{11}$ | gleiche oder verschiedene, mit $C_1$-$C_4$-Alkyl- oder Aralkylgruppen substituierte Arylreste sind, |
| $R^{12}$ | eine einfache Kohlenstoff/Kohlenstoff-Bindung, -O-, -S-, $SO_2$-, -CO-, $-CH_2$-, $-C(CH_3)_2$- oder ein Kohlenstoffatom ist, an das biradikalische Cyclohexyl- bzw. 3,3,5-Trimethylcyclohexyl-Gruppen gebunden sind, und |
| m | ganze Zahlen zwischen 0 und 10 darstellen, |

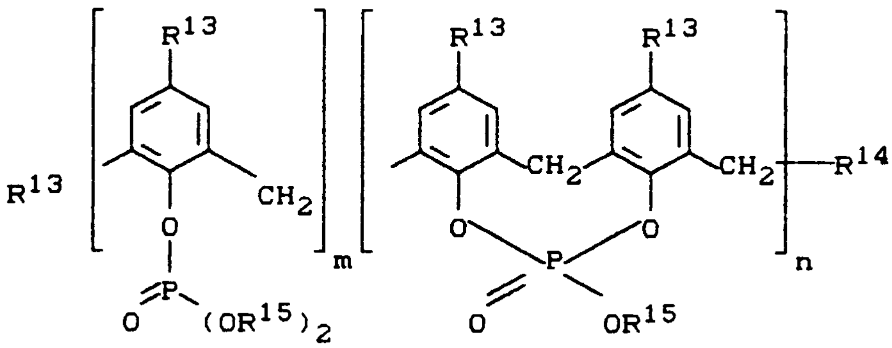

(VIII)

worin

$R^{13}$ Wasserstoff oder Alkyl mit 1 bis 8 Kohlenstoffatomen, bevorzugt Methyl,

$R^{14}$

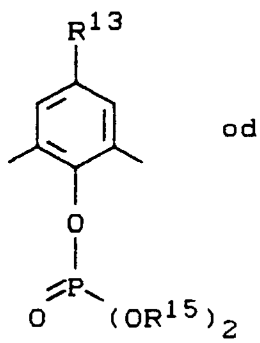

oder

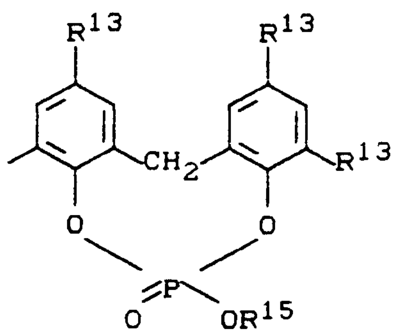

$R^{15}$ Phenyl, wobei dieses durch Alkyl mit 1 bis 4 Kohlenstoffatomen, Aryl wie beispielsweise Phenyl, und oder Aralkyl wie beispielsweise, Benzyl oder 2-Phenyl-ethyl, substituiert sein kann, sind,

worin bei m gleich null n mindestens 1

und $R^{14}$ gleich

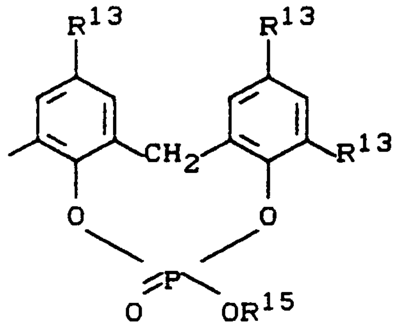

sein muß,

worin bei n gleich null m mindestens 2

und $R^{14}$ gleich

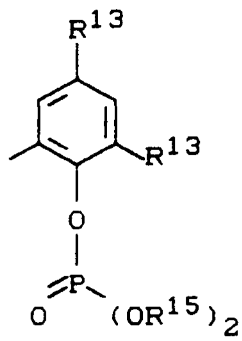

sein muß, und worin

m eine ganze Zahl von Null bis 12 und n eine ganze Zahl von Null bis 5 sind, wobei die Kernzahl des Polyphenolmoleküls, also die Zahl der Benzolringe der Verbindung (VIII), ohne die Reste $R^{13}$ bis $R^{15}$ nicht höher als 12 ist.

**9.** Formmassen gemäß Anspruch 1, enthaltend zusätzlich thermoplastische Polysulfone, thermoplastische Polyethersulfone, thermoplastische Polyketone, thermoplastische Polyetherketone, thermoplastische Polyphenylenether und/oder thermoplastische Polyarylensulfide, Stabilisatoren, Pigmente, Fließmittel, Entformungsmittel, Antistatika und/oder als andere Flammschutzmittel Metall- und Halogenverbindungen bzw. andere Antidrippingmittel und Salze von Sulfonsäuren.

**10.** Verfahren zur Herstellung der Polycarbonatformmassen der Ansprüche 1 bis 9, dadurch gekennzeichnet, daß man die Komponenten A), C), D), E) und gegebenenfalls B), thermoplastische Polysulfone, thermoplastische Polyethersulfone, thermoplastische Polyketone, thermoplastische Polyetherketone, thermoplastische Polyphenylenether und/oder thermoplastische Polyarylensulfide, Stabilisatoren, Pigmente, Füllstoffe, Verstärkungsmittel, Fließmittel, Entformungsmittel, Antistatika und/oder als andere Flammschutzmittel Metall- und Halogenverbindungen bzw. andere Antidrippingmittel und Salze von Sulfonsäuren in bekannter Weise vermischt und bei Temperaturen von 200 °C bis 330 °C in üblichen Aggregaten schmelzcompoundiert oder schmelzextrudiert, oder daß man die Lösungen der jeweiligen der vorstehend genannten Bestandteile in geeigneten organischen Lösungsmitteln mischt und die Lösungsgemische in üblichen Aggregaten eindampft.

**11.** Verwendung der thermoplastischen Formassen gemäß Anspruch 1 zur Herstellung von Formkörpern.

Europäisches Patentamt

# EUROPÄISCHER RECHERCHENBERICHT

Nummer der Anmeldung

EP 92 11 0959

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 351 648 (BAYER AG)<br>* Ansprüche 1-10 * | 1-11 | C08L69/00<br>C08K5/523<br>//(C08L69/00, 55:04,77:00) |
| D | & DE-A-3 824 356<br>--- | | |
| D,Y | EP-A-0 332 965 (BAYER AG)<br>* Ansprüche 1-7 *<br>--- | 1-11 | |
| A | EP-A-0 019 126 (BAYER AG)<br>----- | | |

| RECHERCHIERTE SACHGEBIETE (Int. Cl.5) |
|---|
| C08L<br>C08K |

Der vorliegende Recherchenbericht wurde für alle Patentansprüche erstellt

| Recherchenort | Abschlußdatum der Recherche | Prüfer |
|---|---|---|
| DEN HAAG | 02 NOVEMBER 1992 | DECOCKER L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)